# EUROPEAN PATENT SPECIFICATION

(11) **EP 3 496 251 B1**
(45) Date of publication and mention of the grant of the patent: **09.11.2022**
(21) Application number: 17205441.3
(22) Date of filing: 05.12.2017
(51) Int. Cl.: H02M 1/32, H02M 7/48, B60L 3/00

(54) **DC LINK CIRCUIT, ELECTRIC POWER CONVERTER, VEHICLE AND METHOD FOR CONTROLLING A DC LINK CIRCUIT OF AN ELECTRIC POWER CONVERTER**
GLEICHSTROMZWISCHENKREIS, STROMWANDLER, FAHRZEUG UND VERFAHREN ZUR STEUERUNG EINES GLEICHSTROMZWISCHENKREISES EINES STROMWANDLERS
CIRCUIT DE LIAISON CC, CONVERTISSEUR DE PUISSANCE ÉLECTRIQUE, VÉHICULE ET PROCÉDÉ DE COMMANDE D'UN CIRCUIT DE LIAISON CC D'UN CONVERTISSEUR DE PUISSANCE ÉLECTRIQUE

(43) Date of publication of application: 12.06.2019
(73) Proprietor: Valeo eAutomotive Germany GmbH, 91056 Erlangen (DE)
(72) Inventor: HUBNER, Philip, 91052 Erlangen (DE); GÖTZE, Thomas, 91315 Höchstadt/Aisch (DE)
(74) Representative: Valeo Powertrain Systems

(56) References cited:
- EP-A1- 2 284 982
- EP-A1- 2 460 682
- WO-A1-2017/108046
- DE-A1-102013 223 538
- JP-A- H10 224 902
- US-A1- 2014 070 751
- US-A1- 2015 251 542

## Description

The present invention relates to a DC link circuit for an electric power converter, comprising a smoothing capacitor and at least two discharging units being connected in parallel. Aside, the present invention relates to an electric power converter, a vehicle and a method for controlling a DC link circuit of an electric power converter.

Electric power converters, such as inverters, comprise a DC link circuit with a smoothing capacitor. The smoothing capacitor buffers a DC voltage to be converted by the electric power converter and provides high transient currents in a switching operation. In the case of a failure the smoothing capacitor has to be discharged down to a low protective voltage in order to assure electric safety. Therein, the electric energy stored in the smoothing capacitor has to be discharged rapidly.

It is known to use two discharging units, each having a resistor, connected in parallel for converting the electric energy stored in the smoothing capacitor into heat, when discharging the smoothing capacitor. Therein, a total discharging current flowing through the smoothing capacitor splits up between the discharging units resulting in a reduced thermal load of each discharging unit in comparison to the use of only one discharging unit. Thus, a discharging current flows through each discharging unit while discharging the smoothing capacitor. However, this may still cause an overheating of the discharging units although the total discharging current is split up between them.

EP 2 460 682 A1 discloses a device for rapidly discharging a capacitor, the device comprising two terminals provided to connect them to terminals of the capacitor, n (n ≥ 2) resistors each having a predetermined value, n switches each being associated to one distinct resistor and arranged to control a current through the associated resistor to flow or not to flow and a control unit for the n switches that can be switched based on a discharging command. The control unit is configured to apply a control sequence for the n switches. A first control sequence is provided as follows: at a time to a switch S₁ is closed for connecting a resistor R₁ to the capacitor; at a time t₁ the switch S₁ is opened for disconnecting the resistor R₁ from the capacitor and a switch S₂ is closed for connecting a resistor R₂ to the capacitor; at a time t₂ the switch S₂ is opened for disconnecting the resistor R₂ from the capacitor and a switch S₃ is closed for connecting a resistor R₃ to the capacitor, holding the switch S₃ closed until the capacitor is completely discharged.

WO 2017/108046 A1 discloses a power dissipation system for a power converter of a wind turbine generator, the power dissipation system comprising at least a first dissipation module and a second dissipation module, each of the dissipation modules including a switch unit coupled to a respective dissipating element, a controller configured to provide a respective switch control signal to each of the switch units, and wherein the switch control signal of the first switch unit is different to the switch control signal of the second switch unit. The switch controlling signals are staggered so that at least one of the dissipation modules is conducting at any instant.

EP 2 284 982 A1 discloses a discharge circuit for a DC power supply smoothing capacitor that is used in a power conversion device that supplies DC power via a switch to the DC power supply smoothing capacitor and an inverter, comprising: a resistor that discharges charge in the capacitor; a switch connected in series with the resistor, that either passes or intercepts discharge current flowing from the capacitor to the resistor; and a control circuit that controls continuity and discontinuity of the switch. A second resistor and a second switch are connected in parallel to the first resistor and the second resistor.

JP H10 224902 A discloses a motor driving controller of an electric car. After a key switch is turned off, a load switch by which all the loads of a battery are turned on or off is opened and, at the same time, auxiliary circuits are started and the charge stored in a DC link capacitor is discharged by the auxiliary circuits.

DE 10 2013 223 538 A1 a circuit arrangement for generating a DC link voltage for supplying an inverter. The arrangement comprises a DC link capacitor that provides the DC link voltage and a precharging circuit with a current source, which is configured to generate a precharging current.

US 2015/0251542 A1 discloses an electric drive system for an electric vehicle comprising a precharge circuit adapted to be coupled between a DC power source and a link capacitor. The precharge circuit is comprised of a controlled current source.

Thus, it is an object of the invention to provide a DC link circuit with an improved heat dissipation.

According to the invention, this object is achieved by a DC link circuit according to claim 1.

The invention is based on the consideration that an overheating of each discharging unit can be avoided by controlling the discharging current to flow during the on-time, therein heating the discharging unit up, and by allowing the discharging unit to cool down during the off-time. As heat dissipation from each discharging unit follows a falling exponential function, a majority of the heat dissipation is achieved at the beginning of the exponential function. Thus, the off-time may be kept short relative to a total time, in which the voltage of the smoothing capacitor is reduced to a predefined level. As the on-times are offset to each other, the discharging current can flow through a discharging unit while the other or another discharging unit is cooling down.

Advantageously, by providing the control signal having the on-time and the off-time the heat dissipation of the DC link circuit is improved by allowing the discharging units to cool down. Therein, a substantially continuous discharging behavior is achieved by providing the temporal offset.

According to the invention, the flow of the discharging current is reduced during the off-time. Therein, an average value of the discharging current during the off-time may be at most 50 %, preferably at most 25 %, more preferably at most 10 %, of an average value of the discharging current during the on-time. The control signals may have an equal duration and/or may be provided concurrently.

With respect to the DC link circuit according to the invention it is preferred that the control unit is configured to provide the control signals periodically. Thus, each discharging unit can be cooled down multiple times. A duration of the period may be chosen with respect to the circumstances of the heat dissipation, particularly with respect to thermal resistances and/or thermal capacitances defining the heat dissipation. More preferably, the control unit is configured to provide the periodic control signals continuously until the voltage dropping over the smoothing capacitor has reached a predefined level. The predefined level is typically a touch voltage of, e.g. 60 V. The period may be defined to start with the on-time of one discharging unit. Furthermore, a period of each control signal may have at most one on-time.

Preferably, the on-times of control signals provided to different discharging units are free of an overlap. Thus, at each moment during the control signal at most one discharging unit allows the flow of the discharging current, wherein the discharging current through the or a respective other discharging unit is reduced. This allows the heat dissipation to be substantially balanced among the on-times. However, it is also possible that the on-times of control signals provided to different discharging units are overlapping.

Furthermore, the control signals provided to different discharging units may comprise at least one common dead time, during which all discharging units reduce the flow of the discharging current.

According to an advantageous embodiment of the inventive DC link circuit the control signals cause the discharging units to allow the flow of the discharging current subsequently. In other words, the starting times of respective on-times are temporally spaced to each other. For allowing a more balanced heat dissipation, the time span between subsequent on-times may be equal.

According to the invention, the current drain is realized by a controlled, particularly voltage-controlled, current source circuit being connected to the smoothing capacitor to pull the discharging current. By means of the control signal the current drain may be controlled to pull a, particularly constant, current during the on-time. According to the invention, by means of the control signal the current drain is controlled during the off-time to reduce the discharging current by pulling a constant current, which is lower than the current pulled during the on-time.

Finally, the DC link circuit according to the invention may comprise a heat sink, to which the discharging units are at least partially attached and thermally coupled to each other. Typically, the mounting space for the discharging units is very small so that they cannot be thermally decoupled. Thus, during the off-times the heat sink can cool down, particularly if the dead time is provided. Typically, the resistor or the thermistor of a respective discharging unit is attached to the heat sink. The switching element connected in series to the resistor or to the thermistor, respectively, may be attached to the heat sink as well.

Furthermore, the above object is solved by an electric power converter according to claim 11. Preferably, the electric power converter is an inverter. The electric power converter may comprise switching elements for switching a voltage provided by the DC link circuit. The switching elements may be controlled by a control unit of the electric power converter. The control unit of the electric power converter may be implemented integrally with the control unit of the DC link circuit. Moreover, the above object is solved by a vehicle according to claim 13. The vehicle may comprise an energy source, such as a high-voltage battery (i.e. a battery with a nominal voltage of at least 100 V, particularly at least 200 V) or a fuel-cell, wherein the energy source supplies the DC link circuit. The vehicle may further comprise a contactor interconnected between the energy source and the DC link circuit, wherein the contactor may be opened upon receiving a failure signal. Based on the failure signal the control unit of the DC link of the inverter may be triggered to discharge the smoothing capacitor.

Aside, the above object is solved by a method for controlling a DC link circuit of an electric power converter according to claim 14.

All statements referring to the DC link circuit according to the invention apply analogously to the electric power converter, the vehicle and the method according to the invention so that the advantages described with respect to the DC link circuit may be achieved as well.

Further details and advantages of the invention are disclosed in the following, wherein reference is made to the schematic drawings showing:
Fig. 1 a block diagram of a first comparative example of an electric power converter
Fig. 2 a diagram of control signals over time used in the first comparative example
Fig. 3 a block diagram of a discharging unit of a second comparative example of the electric power converter;
Fig. 4 a block diagram of a discharging unit in accordance with the invention; and
Fig. 5 a schematic drawing of an embodiment of a vehicle according to the invention.

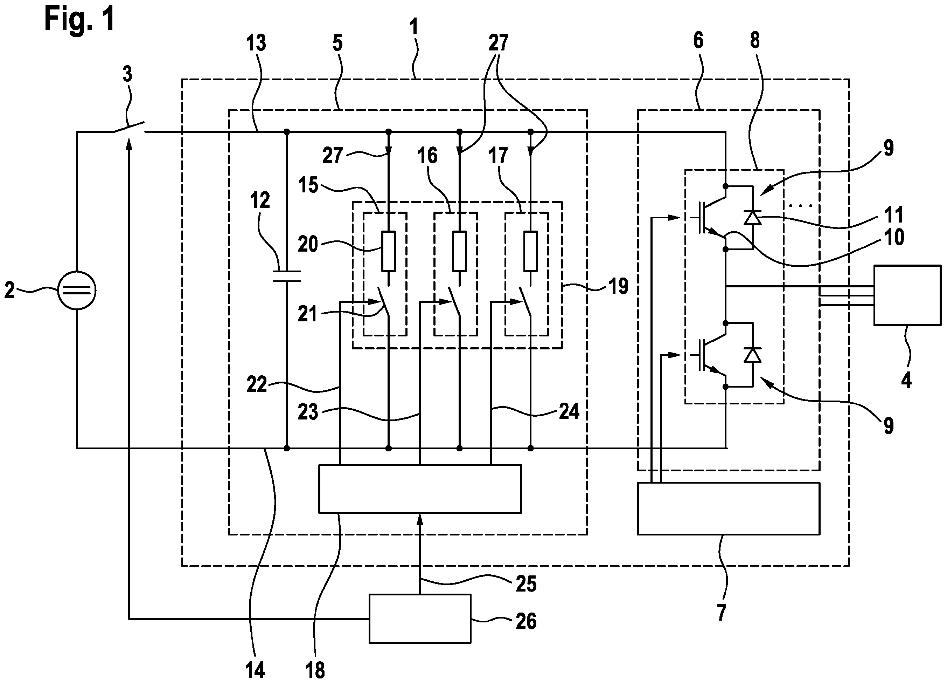

Fig. 1 is a block diagram of a first comparative example of an electric power converter 1, which is configured to convert a DC voltage provided by an energy source 2 via a contactor 3 into a power supplying an electric machine 4. Exemplarily, the electric power converter is an inverter, wherein the energy source 2 is a high-voltage battery or a fuel-cell and the electric machine 4 is supplied by a three-phase AC current.

The electric power converter 1 comprises a DC link circuit 5 supplied by the energy source 2, a power unit 6 and a control unit 7. As the electric power converter 1 is exemplarily described as an inverter, the power unit 6 comprises a number of half bridges corresponding to a number of output phases, wherein each half bridge has a serial connection of two switching elements 9 each comprising a power transistor 10 and a diode 11 connected in parallel. The transistors 10 are controlled by the control unit 7 to switch the voltage provided by the DC link circuit 5 such that the AC current is provided to the output of the inverter.

The DC link circuit 5 comprises a smoothing capacitor 12 connected between an upper supply line 13 and a lower supply line 14 and three discharging units 15, 16, 17 being connected in parallel to each other and in parallel to the smoothing capacitor 12. Furthermore, the DC link circuit 5 comprises a control unit 18 and a heat sink 19, to which the discharging units 15, 16, 17 are attached and thermally coupled to each other.

Each discharging unit 15, 16, 17 comprises a serial connection of a resistor and the switching element 21. The switching element 21 is controlled by a respective control signal 22, 23, 24 provided by the control unit 18. The switching element 21 is realized by a transistor, such as an insulated gate field-effect transistor, an insulated gate bipolar transistor or a bipolar junction transistor, or by a relay.

In a state where the contactor 3 is opened upon receiving a failure signal 25 provided by an external controller 26 or by the control unit 7 of the electric power converter 1 the control unit 18 controls the switching elements 21 to be opened and closed according to the control signals 22, 23, 24. When the switching element 21 is closed, a discharging current 27 flows through a respective discharging unit 15, 16, 17, therein converting electric energy stored in the smoothing capacitor 12 into heat. The heat is dissipated by the heat sink 19, to which the resistors 20 and the switching elements 21 are thermally coupled.

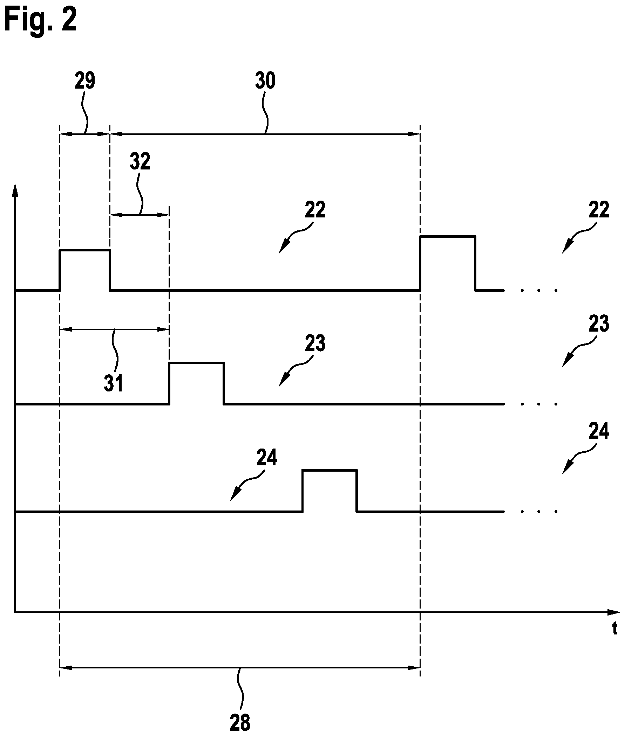

Fig. 2 is a diagram of the control signals 22, 23, 24 over time t.

The control unit 18 is configured to provide the control signals 22, 23, 24 periodically, i.e. the control signals 22, 23, 24 are provided identically and repeatedly without any temporal space therebetween. The control signals 22, 23, 24 have an equal duration 28, in other words an equal periodic time. Each control signal 22, 23, 24 has exactly one on-time 29. During an on-time 29 the control signal 22 causes the switching element 21 of the discharging unit 15 to be closed, therein allowing the flow of the discharging current 27. During an off-time 30 the control signal 22 causes the switching element 21 of the discharging unit 15 to be opened, therein suppressing the flow of the discharging current 27 such that it is zero or nearby zero. The control signals 23, 24 control the discharging unit 16 and the discharging unit 17, analogously.

As can be seen from Fig. 2, the on-times 29 have a temporal offset to each other and are free of an overlap. The control signals 22, 23, 24 cause the discharging units 15, 16, 17 to allow the flow of the discharging current 27 subsequently. Therein, a time span 31 between subsequent on-times 29 is equal. Between each pair of subsequent control signals 22, 23, 24 and after the on-time 29 of the last subsequent control signal 24 a dead time 31 is provided such that the flow of each discharging current 27 is suppressed.

Thus, during the off-times 30 the discharging units 15, 16, 17 can cool down after having been heated up during the on-time 29. During the dead times 31 the heat sink 19 can dissipate the heat to the exterior, efficiently.

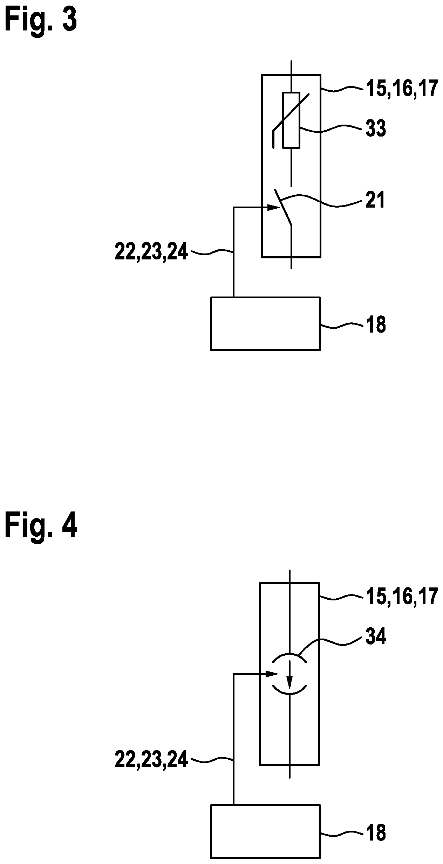

Fig. 3 is a block diagram of a discharging unit 15, 16, 17 of a second comparative example, corresponding to the first example. In place of the resistor 20 a thermistor 33 with a positive temperature coefficient (PTC) is provided.

Fig. 4 is a block diagram wherein each discharging unit 15, 16, 17 of figure 1 is implemented in accordance with the present invention. In place of the resistor 20 and the switching element 21 a current drain 34 controllable by the control signals 22, 23, 24 is provided. During the on-time 29 the current drain 34 pulls a respective discharging current 27 from the smoothing capacitor 12. According to a comparative example, the current drain 34 pulls no current or a current nearby during the off-time. In accordance with the invention, the current drain 34 is realized by a voltage-controlled current source circuit connected in a direction of the desired discharging current 27.

In accordance with the invention, during the off-time 30 the flow of each discharge current 27 is reduced instead of being suppressed. An average value of the reduced discharge current 27 is only 10% of an average value of the discharge current 27 during the on-time 29. In a comparative example with respect to the first and second example the reduction is realized by interconnecting the switching element 21 such that it connects a further resistor in series with the resistor 20 or disconnects a further resistor connected in parallel to the resistor 20. With respect to the embodiment of the invention as claimed, having the current drain 34 realized by a controlled current source circuit, the reduction is realized by controlling the current drain 34 to pull the discharging current 27 with the lower average value.

According to a further embodiment, corresponding to the aforementioned one, the on-times 29 are overlapping, therein avoiding the dead time 31.

According an embodiment according to any of the aforementioned ones, the control unit 7 and the control unit 18 may be realized integrally in the same piece of hardware, e.g. by different sections of software.

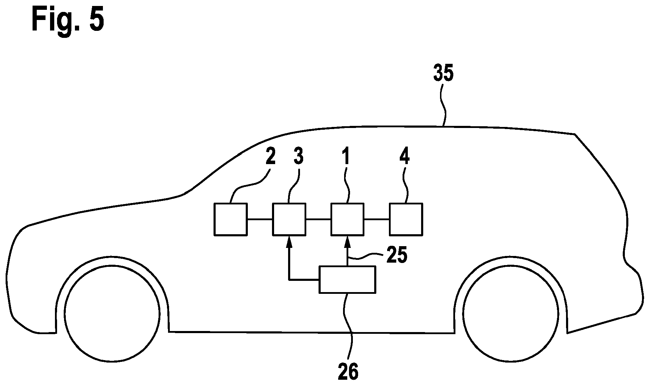

Fig. 5 is a schematic diagram of a vehicle 35, comprising an energy source 2, a contactor 3, an electric power converter 1 according to any of the aforementioned embodiments and an electric machine 4 configured to drive the vehicle 35, Furthermore the vehicle 35 comprises a controller 26, which is configured to provide the external signal 25 and to open the contactor 3.

## Claims

1. DC link circuit (5) for an electric power converter (1), comprising
- a smoothing capacitor (12),
- at least two discharging units (15, 16, 17) being connected in parallel and each comprising a current drain (34) being realized by a controlled current source being connected to the smoothing capacitor (12) to pull a discharging current (27) from the smoothing capacitor (12) through the discharging unit (15, 16, 17) and
- a control unit (18), which is configured to provide control signals (22, 23, 24) each
- controlling the current drain (34) of one discharging unit (15, 16, 17),
- causing the discharging unit (15, 16, 17) to allow a flow of the discharging current (27) during an on-time (29) and to reduce the flow of the discharging current (27) during an off-time (30) and
- controlling the current drain (34) during the off-time (30) to reduce the discharging current by pulling a constant current, which is lower than the current pulled during the on-time (29),
wherein the on-times (29) have a temporal offset to each other.

2. DC link circuit according to claim 1, wherein the current drain (34) is controlled by means of the control signal (22, 23, 24) to pull a current during the on-time (29).

3. DC link circuit according to claim 2, wherein the current is constant.

4. DC link circuit according to any of the preceding claims, wherein
an average value of the discharging current (27) during the off-time (30) is at most 50 %, preferably at most 25 %, more preferably at most 10 %, of an average value of the discharging current during the on-time (29).

5. DC link circuit according to any of the preceding claims, wherein the control unit (18) is configured to provide the control signals (22, 23, 24) periodically.

6. DC link circuit according to claim 5, wherein a period of each control signal (22, 23, 24) has at most one on-time (29).

7. DC link circuit according to any of the preceding claims, wherein the on-times of control signals (22, 23, 24) provided to different discharging units (15, 16, 17) are free of an overlap or are overlapping.

8. DC link circuit according to any of the preceding claims, wherein the control signals (22, 23, 24) cause the discharging units (15, 16, 17) to allow the flow of the discharging current (27) subsequently.

9. DC link circuit according to claim 8, wherein a time span (31) between subsequent on-times (29) is equal.

10. DC link circuit according to any of the preceding claims, wherein it comprises a heat sink (19), to which the discharging units (15, 16, 17) are at least partially attached and thermally coupled to each other.

11. Electric power converter (1) for a vehicle (35), comprising a DC link circuit (5) according to any of claims 1 to 10.

12. Electric power converter according to claim 11, wherein the electric power converter (1) is an inverter.

13. Vehicle (35), comprising an electric machine (4) configured to drive the vehicle (35) and an electric power converter (1) according to claim 11 or 12 configured to supply the electric machine (4).

14. Method for controlling a DC link circuit (5) of an electric power converter (1), comprising
- a smoothing capacitor (12) and
- at least two discharging units (15, 16, 17) being connected in parallel and each comprising a current drain (34) being realized by a controlled current source being connected to the smoothing capacitor (12) to pull a discharging current (27) from the smoothing capacitor (12) through the discharging unit (15, 16, 17), wherein control signals (22, 23, 24) each
- controlling the current drain (34) of one discharging unit (15, 16, 17),
- causing the discharging unit (15, 16, 17) to allow a flow of the discharging current (27) during an on-time (29) and to reduce the flow of the discharging current (27) during an off-time (30) and
- controlling the current drain (34) during the off-time (30) to reduce the discharging current by pulling a constant current, which is lower than the current pulled during the on-time (29),
are provided, wherein the on-times (29) have a temporal offset to each other.

## Patentansprüche

1. Gleichstromverbindungsstreckenschaltung (5) für einen Umsetzer (1) elektrischer Leistung, die Folgendes umfasst:
- einen Glättungskondensator (12),
- wenigstens zwei Entladungseinheiten (15, 16, 17), die parallelgeschaltet sind und jeweils eine Stromsenke (34), die durch eine gesteuerte Stromquelle, die mit dem Glättungskondensator (12) verbunden ist, verwirklicht ist, enthalten, um von dem Glättungskondensator (12) über die Entladungseinheit (15, 16, 17) einen Entladungsstrom (27) zu ziehen, und
- eine Steuereinheit (18), die konfiguriert ist, Steuersignale (22, 23, 24) bereitzustellen, wovon jedes
- die Stromsenke (34) einer Entladungseinheit (15, 16, 17) steuert,
- die Entladungseinheit (15, 16, 17) veranlasst, einen Fluss des Entladungsstroms (27) während einer Einschaltzeit (29) zuzulassen und den Fluss des Entladungsstroms (27) während einer Ausschaltzeit (30) zu verringern, und
- die Stromsenke (34) während der Ausschaltzeit (30) steuert, um den Entladungsstroms durch Ziehen eines konstanten Stroms, der niedriger als der während der Einschaltzeit (29) gezogene Strom ist, zu verringern,
wobei die Einschaltzeiten (29) einen gegenseitigen zeitlichen Versatz aufweisen.

2. Gleichstromverbindungsstreckenschaltung nach Anspruch 1, wobei die Stromsenke (34) durch das Steuersignal (22, 23, 24) gesteuert wird, um während der Einschaltzeit (29) einen Strom zu ziehen.

3. Gleichstromverbindungsstreckenschaltung nach Anspruch 2, wobei der Strom konstant ist.

4. Gleichstromverbindungsstreckenschaltung nach einem der vorhergehenden Ansprüche, wobei der Durchschnittswert des Entladungsstroms (27) während der Ausschaltzeit (30) höchstens 50 %, vorzugsweise höchstens 25 % und stärker bevorzugt höchstens 10 % eines Durchschnittswerts des Entladungsstroms während der Einschaltzeit (29) beträgt.

5. Gleichstromverbindungsstreckenschaltung nach einem der vorhergehenden Ansprüche, wobei die Steuereinheit (18) konfiguriert ist, die Steuersignale (22, 23, 24) periodisch bereitzustellen.

6. Gleichstromverbindungsstreckenschaltung nach Anspruch 5, wobei eine Periode jedes Steuersignals (22, 23, 24) höchstens eine Einschaltzeit (29) enthält.

7. Gleichstromverbindungsstreckenschaltung nach einem der vorhergehenden Ansprüche, wobei die Einschaltzeiten der Steuersignale (22, 23, 24), die für verschiedene Entladungseinheiten (15, 16, 17) bereitgestellt werden, keine Überlappung aufweisen oder miteinander überlappen.

8. Gleichstromverbindungsstreckenschaltung nach einem der vorhergehenden Ansprüche, wobei die Steuersignale (22, 23, 24) die Entladungseinheiten (15, 16, 17) dazu veranlassen, den Fluss des Entladungsstroms (27) nacheinander zuzulassen.

9. Gleichstromverbindungsstreckenschaltung nach Anspruch 8, wobei eine Zeitspanne (31) zwischen aufeinanderfolgenden Einschaltzeiten (29) gleich ist.

10. Gleichstromverbindungsstreckenschaltung nach einem der vorhergehenden Ansprüche, die eine Wärmesenke (19) enthält, an der die Entladungseinheiten (15, 16, 17) wenigstens teilweise befestigt sind und miteinander thermisch gekoppelt sind.

11. Umsetzer (1) elektrischer Leistung für ein Fahrzeug (35), der eine Gleichstromverbindungsstreckenschaltung (5) nach einem der Ansprüche 1 bis 10 enthält.

12. Umsetzer elektrischer Leistung nach Anspruch 11, wobei der Umsetzer (1) elektrischer Leistung ein Wechselrichter ist.

13. Fahrzeug (35), das eine elektrische Maschine (4), die konfiguriert ist, das Fahrzeug (35) anzutreiben, und einen Umsetzer (1) elektrischer Leistung nach Anspruch 11 oder 12, der konfiguriert ist, die elektrische Maschine (4) zu versorgen, enthält.

14. Verfahren zum Steuern einer Gleichstromverbindungsstreckenschaltung (5) eines Umsetzers (1) elektrischer Leistung, die Folgendes umfasst:
- einen Glättungskondensator (12) und
- wenigstens zwei Entladungseinheiten (15, 16, 17) die parallelgeschaltet sind und jeweils eine Stromsenke (34), die durch eine gesteuerte Stromquelle, die mit dem Glättungskondensator (12) verbunden ist, verwirklicht ist, enthalten, um von dem Glättungskondensator (12) über die Entladungseinheit (15, 16, 17) einen Entladungsstrom (27) zu ziehen, wobei Steuersignale (22, 23, 24) bereitgestellt werden, die jeweils
- die Stromsenke (34) einer Entladungseinheit (15, 16, 17) steuern,
- die Entladungseinheit (15, 16, 17) veranlassen, einen Fluss des Entladungsstroms (27) während einer Einschaltzeit (29) zuzulassen und den Fluss des Entladungsstroms (27) während einer Ausschaltzeit (30) zu verringern, und
- die Stromsenke (34) während der Ausschaltzeit (30) steuern, um den Entladungsstrom durch Ziehen eines konstanten Stroms, der niedriger als der während der Einschaltzeit (29) gezogene Strom ist, zu verringern,
wobei die Einschaltzeiten (29) einen gegenseitigen zeitlichen Versatz aufweisen.

## Revendications

1. Circuit de liaison à courant continu (5) pour un convertisseur de puissance électrique (1), comprenant :
- un condensateur de lissage (12),
- au moins deux unités de décharge (15, 16, 17) étant connectées en parallèle et chacune comprenant un drain de courant (34) réalisé par une source de courant contrôlée étant connectée au condensateur de lissage (12) pour tirer un courant de décharge (27) du condensateur de lissage (12) à travers l'unité de décharge (15, 16, 17), et
- une unité de commande (18), qui est configurée pour fournir des signaux de commande (22, 23, 24), chacun
- commandant le drain de courant (34) d'une unité de décharge (15, 16, 17),
- amenant l'unité de décharge (15, 16, 17) à permette une circulation du courant de décharge (27) pendant un temps de marche (29) et à réduire la circulation du courant de décharge (27) pendant un temps d'arrêt (30), et
- commandant le drain de courant (34) pendant le temps d'arrêt (30) pour réduire le courant de décharge en tirant un courant constant, qui est inférieur au courant tiré pendant le temps de marche (29),
où les temps de marche (29) présentent un décalage temporel les uns par rapport aux autres.

2. Circuit de liaison à courant continu selon la revendication 1, dans lequel le drain de courant (34) est commandé au moyen du signal de commande (22, 23, 24) pour tirer un courant pendant le temps de marche (29).

3. Circuit de liaison à courant continu selon la revendication 2, dans lequel le courant est constant.

4. Circuit de liaison à courant continu selon l'une quelconque des revendications précédentes, dans lequel : une valeur moyenne du courant de décharge (27) pendant le temps d'arrêt (30) est au plus 50 %, de préférence au plus 25 %, plus préférablement au plus 10 %, d'une valeur moyenne du courant de décharge pendant le temps de marche (29) .

5. Circuit de liaison à courant continu selon l'une quelconque des revendications précédentes, dans lequel l'unité de commande (18) est configurée pour fournir les signaux de commande (22, 23, 24) de manière périodique.

6. Circuit de liaison à courant continu selon la revendication 5, dans lequel une période de chaque signal de commande (22, 23, 24) a au plus un temps de marche (29) .

7. Circuit de liaison à courant continu selon l'une quelconque des revendications précédentes, dans lequel les temps de marche des signaux de commande (22, 23, 24) fournis à différentes unités de décharge (15, 16, 17) sont exempts de chevauchement ou se chevauchent.

8. Circuit de liaison à courant continu selon l'une quelconque des revendications précédentes, dans lequel les signaux de commande (22, 23, 24) amènent les unités de décharge (15, 16, 17) à permettre la circulation du courant de décharge (27) ultérieurement.

9. Circuit de liaison à courant continu selon la revendication 8, dans lequel les intervalles de temps (31) entre des temps de marche (29) subséquents sont identiques.

10. Circuit de liaison à courant continu selon l'une quelconque des revendications précédentes, dans lequel il comprend un dissipateur thermique (19), auquel les unités de décharge (15, 16, 17) sont au moins partiellement fixées et couplées thermiquement les unes aux autres.

11. Convertisseur de puissance électrique (1) pour un véhicule (35), comprenant un circuit de liaison continu (5) selon l'une quelconque des revendications 1 à 10.

12. Convertisseur de puissance électrique selon la revendication 11, dans lequel le convertisseur de puissance électrique (1) est un onduleur.

13. Véhicule (35), comprenant une machine électrique (4) configurée pour entraîner le véhicule (35) et un convertisseur de puissance électrique (1) selon la revendication 11 ou la revendication 12, configuré pour alimenter la machine électrique (4).

14. Procédé de commande d'un circuit de liaison à courant continu (5) d'un convertisseur de puissance électrique (1), comportant :
- un condensateur de lissage (12), et
- au moins deux unités de décharge (15, 16, 17) étant connectées en parallèle et chacune comprenant un drain de courant (34) réalisé par une source de courant commandée qui est connectée au condensateur de lissage (12) pour tirer un courant de décharge (27) du condensateur de lissage (12) à travers l'unité de décharge (15, 16, 17), où des signaux de commande (22, 23, 24) sont fournis, chacun
- commandant le drain de courant (34) de l'unité de décharge (15, 16, 17),
- amenant l'unité de décharge (15, 16, 17) à permettre une circulation du courant de décharge (27) pendant un temps de marche (29) et à réduire la circulation du courant de décharge (27) pendant un temps d'arrêt (30), et
- commandant le drain de courant (34) pendant le temps d'arrêt (30) pour réduire le courant de décharge en tirant un courant constant, qui est inférieur au courant tiré pendant le temps de marche (29),
où les temps de marche (29) présentent un décalage temporel les uns par rapport aux autres.
